# EUROPÄISCHE PATENTSCHRIFT

(11) **EP 2 569 602 B1**
(45) Veröffentlichungstag und Bekanntmachung des Hinweises auf die Patenterteilung: **25.02.2015**
(21) Anmeldenummer: 11723339.5
(22) Anmeldetag: 12.05.2011
(51) Int. Cl.: G01D 11/00

(54) **ANORDNUNG ZUR VERBINDUNG EINES MESSGERÄTS MIT EINEM DAS ZU MESSENDE MEDIUM ENTHALTENDEN BEHÄLTNIS**
ASSEMBLY FOR CONNECTING A MEASURING INSTRUMENT TO A CONTAINER CONTAINING THE MEDIUM TO BE MEASURED
ENSEMBLE PERMETTANT DE RELIER UN APPAREIL DE MESURE À UN RÉCIPIENT CONTENANT LE FLUIDE À MESURER

(30) Priorität: 12.05.2010 DE 102010020396
(43) Veröffentlichungstag der Anmeldung: 20.03.2013
(73) Patentinhaber: IFM Electronic GmbH, 45128 Essen (DE)
(72) Erfinder: KNOLL, Guido, 88239 Wangen (DE)
(86) Internationale Anmeldenummer: PCT/EP2011/057664
(87) Internationale Veröffentlichungsnummer: WO 2011/141534

(56) Entgegenhaltungen:
- DE-A1- 19 628 551
- JP-A- 2004 037 388

## Beschreibung

Die vorliegende Erfindung betrifft eine Anordnung zur Verbindung eines Messgeräts mit einem das zu messende Medium enthaltenden Behältnis nach dem Oberbegriff des Anspruchs 1 und eine Anordnung zur lösbaren und dichten Verbindung von zwei medienführenden Teilen, insbesondere Rohrleitungen, nach dem Oberbegriff des Anspruchs 2 sowie Messgerät der Prozessmesstechnik nach dem Oberbegriff des Anspruchs 3.

In der Automatisierungstechnik werden häufig Messgeräte eingesetzt, die zur Überwachung eines Mediums bzw. der Eigenschaft eines Mediums dienen. Dabei wird häufig der Füllstand, der Druck oder die Temperatur des Mediums in einem Behältnis gemessen. Meist bestehen solche Messgeräte aus einem als Prozessanschluss bezeichneten Unterteil und einem darauf aufgesetzten Gehäuse als Oberteil, das vorrangig zum Schutz des Sensors und der dazu gehörenden Elektronik dient. Der Prozessanschluss stellt so die Verbindung des Messgeräts mit einem Behälter oder einer Rohrleitung bzw. einem Anschlussstutzen her und beinhaltet meist das Sensorelement selbst. Das Sensorelement ist bspw. bei Druckmessgeräten als piezoresistive oder kapazitive Messzelle ausgeführt.

Um das Messgerät an die Anlage bzw. den Behälter, in der bzw. dem sich das zu messende Medium befindet, anzuschließen, haben sich stutzenartige Adapter als vorteilhaft erwiesen, wie sie bspw. in der deutschen Patentschrift DE 196 28 551 B4 beschrieben sind. Diese Adapter weisen ein sich in axialer Richtung erstreckendes Durchgangsloch und einen in diesem Durchgangsloch befindlichen umlaufenden, als Federsteg ausgebildeten Dichtsteg auf. Üblicherweise wird das Messgerät in den Adapter eingeschraubt, wobei die untere Seite des Messgeräts, d.h. der Prozessanschluss, an dem umlaufenden Dichtsteg anliegt. Durch die Einschraubung des Messgeräts mit einem vorgegebenen Drehmoment kann der Anpressdruck zwischen Prozessanschluss und Dichtsteg des Adapters definiert werden.

Bei bestimmten Anwendungen hat sich als vorteilhaft herausgestellt, die Verbindung zwischen Prozessanschluss und Adapter ohne zusätzliches Dichtelement zu realisieren, da eine separate Dichtung einerseits ein verlierbares Bauteil ist, das als zusätzliches Bauteil einen weiteren Kostenfaktor darstellt, und andererseits dadurch auch die Toleranzen aufsummiert werden. Ohne zusätzliches Dichtelement bilden die Berührungsflächen von Prozessanschluss und Adapter eine sog. Metall-Metall-Dichtung. Allerdings sind Verbindungen mit einem derartigen Dichtungskonzept nicht zum häufigen Lösen der Verbindung geeignet, was bei durchzuführenden Inspektionen und Wartungsarbeiten nachteilig sein kann.

Der Erfindung liegt nun die Aufgabe zugrunde, die Verbindung zwischen Messgerät und Adapter bzw. zwischen den beiden Adapterhälften der eingangs genannten Anordnungen bzw. die Verbindung zwischen Prozessanschluss und Messzelle ohne zusätzliches Dichtelement einfacher handhabbar zu machen und dabei insbesondere hinsichtlich mehrmaligen Lösens weiter zu verbessern.

Diese Aufgabe wird erfindungsgemäß jeweils durch eine im Anspruch 1 und Anspruch 2 genannte Anordnung sowie durch ein im Anspruch 3 genanntes Messgerät gelöst. Vorteilhafte Ausgestaltungen der Erfindung sind in den Unteransprüchen angegeben.

Erfindungsgemäß weist mindestens eine der Dichtflächen eine Beschichtung aus Parylene auf. Mit Dichtflächen sind dabei die jeweils dem Messgerät und dem Adapter bzw. jeweils den beiden Adapterhälften zugehörigen Kontaktflächen gemeint, an denen sich Messgerät und Adapter bzw. die beiden Adapterhälften im Bereich des Dichtstegs berühren. Dabei kann jeweils nur eine Dichtfläche beschichtet sein oder auch beide. Die Dauerhaftigkeit wurde am Beispiel eines Druckmessgeräts durch millionenfache Druckzyklen bei Drücken bis 50 bar getestet.

Im Folgenden werden zwei weitere Aspekte der Erfindung, die lösbare und dichte Verbindung von zwei medienführenden Teilen sowie ein Druckmessgerät zur statischen oder dynamischen Druckmessung, zusammen mit dem ersten Aspekt, dem Zusammenwirken von Prozessanschluss eines Messgeräts und eines Adapters, beschrieben, da die Erfindung auch für die Verbindung zweier medienführenden Teile sowie für ein Druckmessgerät anwendbar ist. Bei medienführenden Teilen sind insbesondere Rohrleitungen oder Armaturen, wie bspw. Ventile, gemeint. Wenn bspw. zwei Rohrleitungen in einer Anlage der Lebensmittelindustrie miteinander insbesondere lösbar verbunden werden sollen, stellen sich zum Teil ähnliche Probleme wie bei der Kopplung von Messgeräten mit einer Industrieanlage.

Der Vorteil der erfindungsgemäßen Lösung liegt insbesondere darin, dass durch die Parylenebeschichtung ein gegenseitiger Abrieb an den Dichtflächen beim Zusammenfügen Messgerät und Adapter bzw. den beiden Adapterhälften bzw. dem Prozessanschluss und der Messzelle vermieden wird. Diese Beschichtung dient somit zur Schonung, hat aber keinen verschlechternden Einfluss auf die guten Dichteigenschaften der Metall-Metall-Dichtung bzw. bei Abdichtung einer Werkstoffpaarung ohne elastische Eigenschaften.

Parylene ist ein hydrophobes, chemisch resistentes Beschichtungsmaterial mit guter Barrierenwirkung gegenüber anorganischen und organischen Medien, starken Säuren, Laugen, Gasen und Wasserdampf. Als biostabile und biokompatible Beschichtung besitzt sie eine FDA-Zulassung (Food and Drug Administration, US-amerikanische Behörde für Lebensmittel- und Arzneimittelsicherheit), ist temperaturbeständig bis zu 220 °C und mechanisch stabil von -200 °C bis +150 °C. Weitere Vorteile sind, dass beim Beschichten niedrige mechanische Spannungen erzeugt werden und sie insbesondere abriebfest ist, weshalb eine derartige Beschichtung zur Schonung der die Metall-Metall-Dichtung herstellenden Teile sehr gut geeignet ist. Dies zeigt sich auch, wenn in manchen Anwendungen die Auflagefläche zwischen den beiden Dichtflächen zu einem quasi linienförmigen Bereich verringert wird. Die Parylenebeschichtung gibt dann der erhöhten Druckspannung nach und reißt nicht. Des Weiteren können durch Beschichtung aus Parylene Riefen und allgemein raue Oberflächen der Dichtflächen geglättet werden, was die Dichtwirkung verbessert. Eine Beschichtung aus Parylene ist somit eine hochpräzise Barriereschicht mit einer guten Gleiteigenschaft.

Die Beschichtung wird üblicherweise durch Kondensation aus der Gasphase aufgetragen, d.h. Parylene wird auf das Werkstück aufgedampft. Das hat den Vorteil, dass eine weitgehend gleichmäßige Beschichtung möglich ist. Aufgedampfte Schichten können auch organisch modifizierte SiOₓ-Schichten sein. Dem gegenüber gibt es auch Beschichtungen, die in der Flüssig- oder Pulverphase aufgetragen werden, wie bspw. Sol-Gel-Beschichtungen oder -Lacke, bei denen diese Gleichmäßigkeit nicht oder nicht ohne Weiteres möglich ist. Gerade bei sehr dünnen Beschichtungen ist aber diese Gleichmäßigkeit notwendig, um die Toleranzgrenzen nicht zu überschreiten.

Unter dem Begriff "Parylene" sollen hierbei auch artverwandte Stoffe mit umfasst sein, deren Ausgangsmaterial di-para-Xylylen (oder halogenierte Substituenten) ist. Der Oberbegriff dieser Stoffe wird als Cyclophan bezeichnet. Im Wesentlichen tritt Parylene in vier verschiedenen Dimeren auf mit den folgenden Bezeichnungen: Parylene C, Parylene N, Parylene D und Parylene F, wobei Parylene C bevorzugt wird.

Derartige Beschichtungen aus Parylene werden bspw. von der Fa. Plasma-Parylene Systems GmbH in Rosenheim durchgeführt.

Neben Parylene sind grundsätzlich auch Beschichtungen aus Polyetheretherketon (PEEK) oder aus Polytetrafluorethylen (PTFE) denkbar, da sie ebenso wie Parylene selbstschmierend sind und einen guten Trockenschmiereffekt erzielen, wobei PEEK zur Verbesserung dieser Eigenschaft vorzugsweise noch mit PTFE- und/oder Silikon-Anteilen versetzt wird. PEEK ist chemisch sehr stabil und weist bei typischen Belastungsarten und Temperaturbereichen, bspw. in der Lebensmittel- und Pharmaindustrie, keine Fließeigenschaften auf. Da es auch für die Lebensmittel- und Pharmaindustrie zugelassen ist (FDA-Zulassung), hebt es sich in der Praxis von anderen, ebenfalls geeigneten hochwertigen Kunststoffen ab. Ebenfalls denkbar ist, diesen Materialien wenigstens einen Füll- oder Verstärkungsstoff zuzusetzen, d.h. eine Polymermatrix mit mikro- und/oder nanoskaligen Partikeln aus bspw. Keramik, Metall, Glas, Graphit oder einem Elastomer bzw. eine Kombination dieser Stoffe.

In einer vorteilhaften Ausgestaltung weist die Paryleneschicht eine Dicke zwischen 0,1µm und 50µm auf. Besonders bevorzugt liegt die Dicke zwischen 5µm und 30µm, da in diesem Bereich ein optimales Verhältnis zwischen technischem Aufwand und Nutzen besteht.

In einer weiteren bevorzugten Ausgestaltung ist der Dichtsteg als Federsteg ausgebildet. Während des Einschraubens des Messgeräts in den Adapter bzw. beim Zusammenführen der beiden Adapterhälften wird der Federsteg vorgespannt. Durch diese Vorspannung des nun als Federsteg wirkenden Dichtstegs wird ein "Kraftpuffer" erzeugt, der dynamisch auf Druck- und Temperaturschwankungen, d.h. die Dichtwirkung beeinflussende Einflüsse, reagieren kann. Entweder die Vorspannung wird weiter erhöht oder die Vorspannung wird geringer, wodurch aber immer noch sichergestellt ist, dass der vom Federsteg ausgehende Anpressdruck auf die gegenüberliegende Dichtfläche groß genug ist, um eine dauerhafte Dichtwirkung zu gewährleisten. Bevorzugt wird die Vorspannung definiert durch eine am Prozessanschluss vorgesehene umlaufende, schulterartige Erstreckung. Durch diese nach außen gerichtete Erstreckung schlägt der Prozessanschluss an dem Adapter an, wodurch die Einschub- bzw. Einschraubtiefe - je nach Art der lösbaren Verbindung - begrenzt wird. Im Falle einer Schraubverbindung muss die Einschraubtiefe und damit die Vorspannung des Federstegs nicht über ein vorgegebenes Anzugsmoment definiert werden, sondern wird durch den konstruktiven Aufbau der Anordnung selbst vorgegeben.

In einer besonders bevorzugten Ausgestaltung ist die lösbare Verbindung zwischen Messgerät und Adapter bzw. zwischen den beiden Adapterhälften durch eine Schraub- und/oder Flansch- und/oder Klemmverbindung realisiert. Die Schraubverbindung wird durch ein am Prozessanschluss bzw. an einer Adapterhälfte vorgesehenes Außengewinde und ein am Adapter bzw. an der jeweils komplementären Adapterhälfte vorgesehenes Innengewinde hergestellt. Bei den Flanschund Klemmverbindungen sind jegliche Rast-, Steck- und Klemmvorrichtungen, insbesondere Clamp-Klemmverbindungen, denkbar, mit denen der Prozessanschluss innerhalb des Adapters bzw. die beiden Adapterhälften miteinander lösbar aber fest verbunden werden kann bzw. können.

Vorteilhafte Anwendungen der Erfindung sind Messgeräte, insbesondere zur Messung einer Prozessgröße, die an eine Industrieanlage, z.B. in Molkereien und Brauereien, bis hin zu pharmazeutischen Anlagen angeschlossen werden und dabei besonderen Anforderungen ausgesetzt sind hinsichtlich Temperatur- und Druckschwankungen, Änderung des zu messenden Mediums und automatischen Reinigungsprozessen. Unter Prozessgröße sind alle physikalischen Größen zu verstehen, die für die Prozessmesstechnik interessant sind, insbesondere die Größen Druck, Temperatur, Strömung bzw. Durchfluss, Füllstand und Analysemesstechnik.

Als medienführende Teile im Sinne der Anmeldung werden alle mit Medien, wie Flüssigkeiten oder Gasen in Kontakt stehende oder medientransportierende Vorrichtungen, wie Rohre, Behälter, Formstücke, Ventile o. dgl., verstanden. Verbindungen für medienführende Teile sind demnach Verbindungen zwischen Rohren, Behältern o. dgl. Unter Behältnis werden insbesondere Behälter, Rohrleitungen etc. verstanden.

Nachfolgend wird die Erfindung im Zusammenhang mit Figuren anhand von Ausführungsbeispielen näher erläutert.

Es zeigen:
Figur 1 erfindungsgemäße Anordnung vor dem Zusammenbau, teilweise geschnitten,
Figur 2 Längsschnittdarstellung einer erfindungsgemäßen Anordnung, bestehend aus einem Adapter und einem eingeschraubten Prozessanschluss eines Messgeräts,
Figur 3 Ausschnitt aus Fig. 2, der die Beschichtung des Dichtfederstegs des Adapters vergrößert darstellt,
Figur 4 Längsschnitt durch Wandung eines Adapters zur Verbindung zweier Rohrverbindungen und
Figur 5 Ausschnitt aus Fig. 2, der die Beschichtung des Federstegs des Prozessanschlusses vergrößert darstellt.

In den nachfolgenden Figuren bezeichnen, sofern nicht anders angegeben, gleiche Bezugszeichen gleiche Teile mit gleicher Bedeutung.

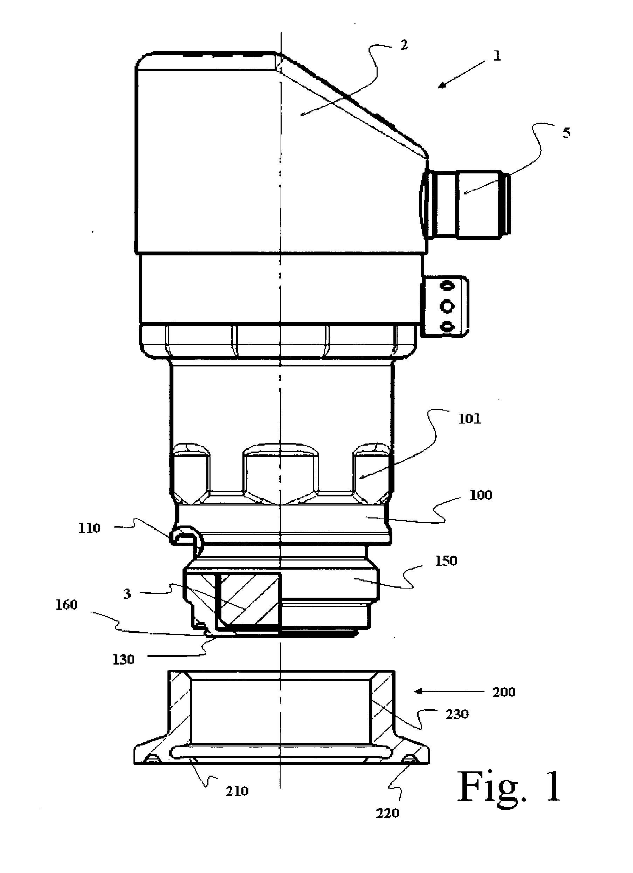

Fig. 1 zeigt ein Messgerät 1 für die Prozessmesstechnik, im vorliegenden Fall ein Druckmessgerät, das im Wesentlichen in einen Prozessanschluss 100 und einen darauf aufgesetzten Gehäuse 2 unterteilt werden kann. Auch wenn hier beispielhaft ein Druckmessgerät angeführt ist, so ist die Erfindung jedoch nicht auf ein solches Messgerät beschränkt, sondern kann jegliche Messgeräte der eingangs genannten Art, insbesondere Temperatur- und Strömungsmessgeräte, umfassen. Der Prozessanschluss 100 besitzt äußerlich einen Sechskant 101, eine erste umlaufende und sich nach außen erstreckende Anschlagsvorrichtung 110 und ein Außengewinde 150. Einzelheiten hierzu werden in den folgenden Figuren näher beschrieben. Wenn im Folgenden nur von einer Gewindeverbindung zwischen Messgerät 1 und Adapter 200 gesprochen wird, so stellt dies lediglich eine bevorzugte Ausführung dar. Selbstverständlich sind alle Arten bekannter Verbindungstechniken, wie bspw. Rast- und Kupplungsverbindungen denkbar.

Der Prozessanschluss 100 ist bevorzugt aus Edelstahl (V4A, V2A), höherwertigen Stählen oder Hart-Kunststoffen ausgeführt. Edelstahl ist für Anwendungen in der Lebensmittelindustrie sehr gut geeignet ist. Durch den kleinen Ausschnitt in Form einer Schnittdarstellung unten links ist die Messzelle 3 und die Lage dieser Messzelle 3 auf den Dichtfedersteg 130 des Messgeräts 1 zu sehen. Ausführliche Informationen diesbezüglich sind der eingangs genannten deutschen Patentschrift DE 196 28 551 B4 zu entnehmen. Des Weiteren ist durch das Schnittbild die abgeschrägte Dichtkante 160 zu sehen.

Fig. 1 zeigt weiter einen Adapter 200, der wie im vorliegenden Fall eine Hälfte einer Clamp-Klemmverbindung sein kann. Die Erfindung ist hierbei aber nicht auf Clamp-Klemmverbindungen beschränkt, sondern erstreckt sich auf alle vergleichbaren Adapter- oder Flanschvorrichtungen. Auch der Adapter 200 ist aufgrund der Anwendungen in der Lebensmittelindustrie bevorzugt aus Edelstahl (V4A, V2A) ausgeführt, wobei prinzipiell auch sehr harte Kunststoffe denkbar sind. Auf der Unterseite des Adapters 200 befindet sich eine umlaufende Nut 220, in die eine Flachdichtung mit einer beidseitigen Erhöhung eingesetzt werden kann. Diese Erhöhungen greifen dann in die Nuten 220 ein und verhindern dadurch das Verrutschen der Flachdichtung, wenn zwei gleichartige Adapter 200 entgegengesetzt zueinander angeordnet werden sollen. Weiterhin ist der umlaufende Dichtsteg 210 zu sehen.

Im Folgenden wird der Dichtsteg 210 nur noch als "Dichtfedersteg" bezeichnet, da die federnde Wirkung des Dichtstegs 210 eine bevorzugte Ausgestaltung darstellt. Ungeachtet dessen ist die Erfindung auch mit Dichtsteg ohne federnde Eigenschaften ausführbar und aufgrund dessen nicht auf einen Dichtfedersteg begrenzt. Die Federelastizität kann ebenso durch die Eigenelastizität der verwendeten Komponenten bzw. eine rückwärtige elastische Lagerung erreicht werden.

Der Dichtfedersteg 210 weist eine - aus Sicht des Schnittbildes im Durchmesser -Länge im Bereich von bevorzugt 2 - 8 mm auf, wobei er durchaus auch länger sein kann. Die Innenwand des Adapters weist ein Innengewinde 230 auf, in das beim Einschrauben des Messgeräts 1 das Außengewinde 150 des Prozessanschlusses 100 eingreifen kann. Um die Möglichkeit des Ineinanderschraubens zu verdeutlichen sind Messgerät 1 und Adapter 200 in derselben Flucht, d.h. mit derselben Mittelachse dargestellt. Es ist daher gut vorstellbar, wie das Messgerät 1 in den Adapter 200 eingeschraubt werden kann.

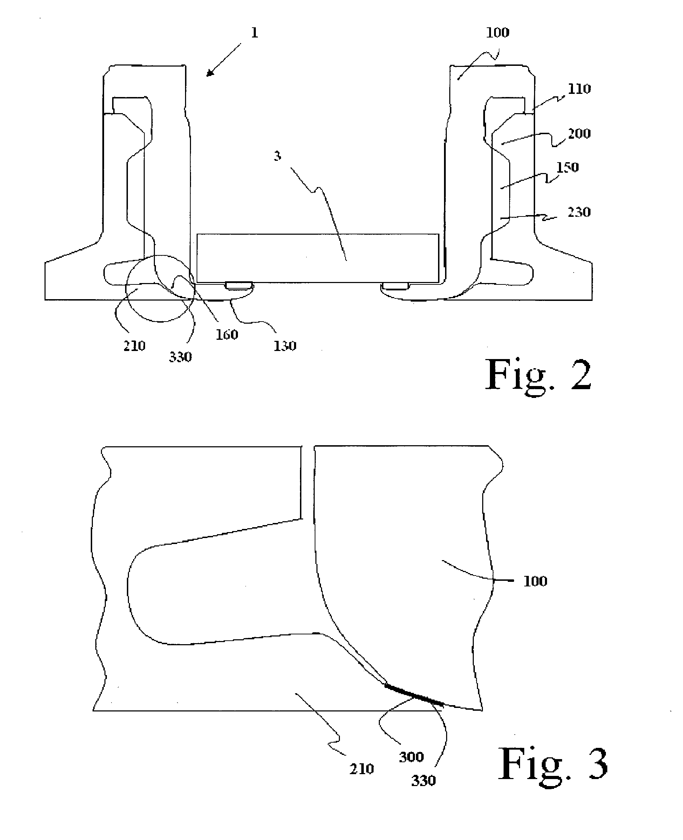

Wenn das Messgerät 1 weit genug in den Adapter 200 eingeschraubt wurde, berührt die Dichtkante 160 des Prozessanschluss 100 (Fig. 2) den Dichtfedersteg 210. Aufgrund der federelastischen Eigenschaften des Dichtstegs 210 kann er im Bereich von wenigen zehntel Millimetern, bevorzugt zwischen 0,08 mm und 0,2 mm in axialer Richtung vorgespannt werden. Eine Begrenzung der maximalen Einschraubtiefe erfolgt durch eine umlaufende Anschlagsvorrichtung 110 am oberen Rand des Prozessanschlusses 100.

Die erfindungsgemäße Anordnung aus Messgerät 1 - dargestellt durch dessen Prozessanschluss 100 - und Adapater 200 zeigen die Figuren 2 und 3, wobei Fig. 3 den mit einem Kreis dargestellten Ausschnitt aus Fig. 2 vergrößert darstellt. Messgerät 1 und Adapter 200 sind mittel einer Schraubverbindung miteinander verbunden, in dem das Außengewinde 150 des Prozessanschlusses 100 mit dem Innengewinde 230 des Adapters 200 zusammenwirkt. Während des Einschraubvorgangs kommt es an der als Dichtkante 160 bezeichneten Stelle des Prozessanschlusses 100 zur Berührung mit dem Adapter 200, d.h. mit dessen Dichtsteg bzw. Dichtfedersteg 210, und bildet so eine Metall-Metall-Dichtung. Diese Berührungsflächen werden als Dichtflächen bezeichnet. Je weiter das Messgerät 1 in den Adapter 200 eingeschraubt wird, desto mehr wird der Dichtfedersteg 210 vorgespannt. Zur Begrenzung der maximalen Einschraubtiefe ist ein Anschlag 110 vorgesehen.

In Fig. 3 ist die Beschichtung 300 schematisch durch einen dickeren schwarzen Strich dargestellt. Es ist für die Erfindung unbeachtlich, ob nur die Dichtfläche des Dichtfederstegs 210 oder die Dichtfläche des Prozessanschlusses 100 oder beide Dichtflächen beschichtet ist bzw. sind oder der ganze Dichtfedersteg 210 oder der ganze Adapter 200 und/oder der gesamte Prozessanschluss 200 etc. Wesentlich für die Erfindung ist, dass sich zwischen den sich berührenden Teilen Dichtfedersteg 210 und Dichtkante 160 des Prozessanschlusses 100 eine Beschichtung 300 befindet.

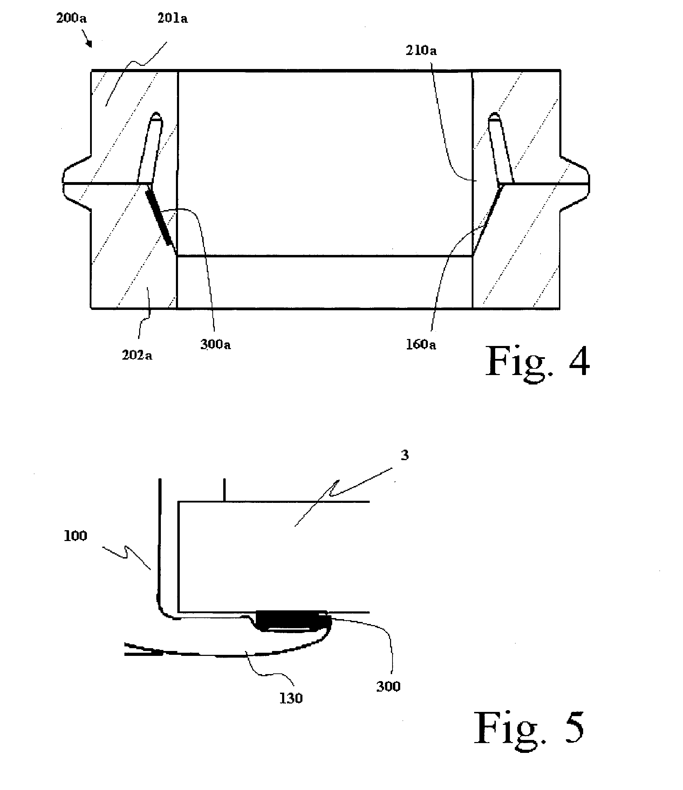

Fig. 4 zeigt die Anwendung des erfindungsgemäßen Prinzips zur Verbindung zweier hier nicht näher dargestellten Rohrleitungen. Der Adapter 200a, der die Verbindung herstellt, ist dabei unterteilt in einen ersten Teil 201a und einen zweiten Teil 202a. Beide Teile 201a, 202a werden als Verlängerung der Rohrleitungen auf diese aufgesetzt bzw. sind ein Teil derselben, wobei die Verbindung zwischen Adapterteile 201a, 202a und den Enden der Rohleitungen vorzugsweise durch Verschweißen erfolgt. Die Adapterteile 201a, 202a sind unterschiedlich aufgebaut, wobei der erste Teil 201 a den Dichtfedersteg 210a aufweist. Der Dichtfedersteg 210a ist in diesem Fall in axialer Richtung ausgerichtet. Idealerweise entspricht der Innendurchmesser des Adapters 200a gleich dem Innendurchmesser der Rohrleitung. Aus diesem Grund bietet sich die axiale Ausrichtung des Dichtfederstegs 210a an. Die Funktionalität gegenüber der nach innen gerichteten Ausführung bei der Abdichtung eines Messgeräts ist aber identisch. Der zweite Teil des Adapters 202a weist eine Dichtkante 160a auf. Der Dichtfedersteg 201a berührt wie in dem zuvor erläuterten Ausführungsbeispiel die Dichtkante 160a, wodurch eine Metall-Metall-Dichtung gebildet wird. Mithilfe der Beschichtung 300a können die Vorteile der Erfindung auch auf die Verbindung von Rohrleitungen angewendet werden. Die Beschichtung 300a ist in Fig. 4 zur besseren Verdeutlichung absichtlich übertrieben durch einen schwarzen Streifen dargestellt, weshalb weder auf die genaue Dicke noch auf die Länge Rückschlüsse gezogen werden können. Wie bereits in Fig. 3 dargelegt, ist es für die Erfindung unerheblich in welchem Umfang, d.h. welche Einzelteile beschichtet sind, lediglich die Fläche zwischen den sich berührenden Teilen Dichtfedersteg 210a und Dichtkante 160a muss sich eine Beschichtung befinden.

Fig. 5 zeigt einen Ausschnitt aus der Fig. 2, bei dem die Lage der Druckmesszelle 3 auf den Dichtfederstegen 130 des Prozessanschlusses 100 dargestellt wird. Wie aus der deutschen Patentschrift DE 196 28 551 B4 bekannt ist, kann auch die Druckmesszelle, die für gewöhnlich aus Keramik ist, auf Dichtfederstegen 130 gelagert werden, um die bereits erläuterten Vorteile des "Kraftpuffers" nutzen zu können. Letztlich ist man hier aber immer von einer Verwendung eines separaten Dichtelements ausgegangen, z.B. durch einen Flachdichtungsring aus PTFE. Allerdings ließe sich auch hier die (Quasi-) Metall-Metall-Dichtung anwenden, wobei hierfür die Bezeichnung "Metall-Metall" nicht mehr ganz zutreffend ist. Da es aber um die Art der Dichtung geht, d.h. die Dichtung ohne zusätzliches Dichtmittel, wird die Bezeichnung Metall-Metall-Dichtung auch weiterverwendet, um den Zusammenhang mit den zuvor beschriebenen Ausführungsformen darzustellen.

Auch hier ist die Beschichtung 300 wie in Fig. 4 zur besseren Verdeutlichung absichtlich übertrieben durch einen schwarzen Streifen dargestellt, weshalb weder auf die genaue Dicke noch auf die Länge Rückschlüsse gezogen werden können. Wie bereits in Fig. 3 dargelegt, ist es für die Erfindung unerheblich in welchem Umfang, d.h. welche Einzelteile beschichtet sind, lediglich die Fläche zwischen den sich berührenden Teilen Dichtfedersteg 210a und Dichtkante 160a muss sich eine Beschichtung befinden. Im Wesentlichen sind ist der Erfindungsgedanke aus den zuvor beschriebenen Ausführungsformen analog auch auf diese Ausführung anwendbar. Zur Vermeidung von Wiederholungen wird auf die entsprechenden Passagen verwiesen.

### Bezugszeichenliste

- 1: Messgerät
- 2: Gehäuse
- 3: Messzelle
- 5: Steckerbuchse
- 100: Prozessanschluss
- 101: Sechskant
- 110: Anschlag
- 130: Dichtfedersteg (des Messgeräts)
- 150: Außengewinde
- 160, 160a: Dichtkante
- 200, 200a: Adapter
- 201a: erster Teil des Adapters
- 202a: zweiter Teil des Adapters
- 210, 210a: Dichtsteg, Dichtfedersteg (des Adapters)
- 220: Nut
- 230: Innengewinde
- 300: Beschichtung
- 330: Metall-Metall-Dichtung

## Patentansprüche

1. Anordnung, insbesondere zur Messung einer Prozessgröße, bestehend aus einem einen Prozessanschluss (100) aufweisendes Messgerät (1) mit einem zumindest im Bereich des Prozessanschlusses (100) teilweise rotationssymmetrischen Gehäuse (2), einem Adapter (200, 200a) mit einem sich in axialer Richtung erstreckenden Durchgangsloch und einem Dichtsteg (210) im Durchgangsloch, wobei zwischen dem Messgerät (1) und dem Adapter (200) über zwei Dichtflächen eine lösbare und dichte Verbindung besteht, **dadurch gekennzeichnet, dass** mindestens eine der Dichtflächen eine Beschichtung (300) aus Parylene aufweist.

2. Anordnung zur lösbaren und dichten Verbindung von zwei medienführenden Teilen, insbesondere Rohrleitungen, bei der die beiden medienführenden Teile jeweils an einem Ende rotationssymmetrisch ausgestaltet sind und in jeweils eine Adapterhälfte (201a, 202a) mit einem sich in axialer Richtung erstreckenden Durchgangsloch eingeführt sind, wobei zumindest eine der Adapterhälften (201 a, 202a) einen Dichtsteg (210a) im Durchgangsloch aufweist und zwischen den beiden Adapterhälften (201a, 202a) über zwei Dichtflächen eine lösbare und dichte Verbindung besteht, **dadurch gekennzeichnet, dass** mindestens eine der Dichtflächen eine Beschichtung (300) aus Parylene aufweist.

3. Messgerät (1) für die Prozessmesstechnik, bestehend aus einem Prozessanschluss (100), einem auf dem Prozessanschluss (100) aufgesetzten Gehäuse (2) und einer Messzelle (3), wobei der Prozessanschluss (100) einen nach innen ragenden Dichtsteg (130) aufweist und die Messzelle (3) auf dem Dichtsteg (130) aufliegt, und wobei zwischen dem Prozessanschluss (100) und der Messzelle (3) über zwei Dichtflächen eine dichte Verbindung besteht, **dadurch gekennzeichnet, dass** mindestens eine der Dichtflächen eine Beschichtung (300) aus Parylene aufweist.

4. Anordnung bzw. Messgerät nach einem der vorangehenden Ansprüche, **dadurch gekennzeichnet, dass** die Dicke der Beschichtung (300) bevorzugt zwischen 0,1µm und 50µm, besonders bevorzugt zwischen 5µm und 30µm liegt.

5. Anordnung bzw. Messgerät nach einem der vorangehenden Ansprüche, **dadurch gekennzeichnet, dass** der Dichtsteg (130, 210, 210a) als Federsteg ausgebildet ist.

6. Anordnung bzw. Messgerät nach Anspruch 5, **dadurch gekennzeichnet, dass** der Federsteg eine, vorzugsweise in axialer Richtung wirkende, dauerhafte Vorspannung erfährt, die durch eine am Prozessanschluss (100) bzw. an dem medienführenden Teil vorgesehene umlaufende, schulterartige Erstreckung (110) definiert wird.

7. Anordnung bzw. Messgerät nach einem der vorangehenden Ansprüche, **dadurch gekennzeichnet, dass** die lösbare Verbindung zwischen Messgerät (1) und Adapter (200) bzw. zwischen den beiden Adapterhälften (201 a, 202a) durch eine Schraub- und/oder Flansch- und/oder Klemmverbindung realisiert ist.

8. Anordnung bzw. Messgerät nach einem der vorangehenden Ansprüche, **dadurch gekennzeichnet, dass** das Messgerät (1) für die Messung einer Prozessgröße geeignet ist, insbesondere zur Druck-, Temperatur-, Strömungs- und Füllstandsmessmessung.

## Claims

1. Assembly, in particular for measuring a process variable, consisting of a measuring instrument (1) having a process connection (100) and a housing (2), which is partially rotationally symmetrical at least in the region of the process connection (100), and of an adapter (200, 200a) having a through-hole, which extends in the axial direction, and a sealing web (210) in the through-hole, there being a releasable and sealed connection between the measuring instrument (1) and the adapter (200) by way of two sealing surfaces, **characterized in that** at least one of the sealing surfaces has a parylene coating (300).

2. Assembly for the releasable and sealed connection of two media-carrying parts, in particular pipelines, in which the two media-carrying parts are respectively configured as rotationally symmetrical at one end and are respectively inserted into one adapter half (201a, 202a) with a through-hole extending in the axial direction, at least one of the adapter halves (201a, 202a) having a sealing web (210a) in the through-hole, and there being a releasable and sealed connection between the two adapter halves (201a, 202a) by way of two sealing surfaces, **characterized in that** at least one of the sealing surfaces has a parylene coating (300).

3. Measuring instrument (1) for process measurement technology, consisting of a process connection (100), a housing (2) placed on top of the process connection (100) and a measuring cell (3), the process connection (100) having an inwardly protruding sealing web (130) and the measuring cell (3) resting on the sealing web (130), and there being a sealed connection between the process connection (100) and the measuring cell (3) by way of two sealing surfaces, **characterized in that** at least one of the sealing surfaces has a parylene coating (300).

4. Assembly or measuring instrument according to one of the preceding claims, **characterized in that** the thickness of the coating (300) is preferably between 0.1 µm and 50 µm, particularly preferably between 5 µm and 30 µm.

5. Assembly or measuring instrument according to one of the preceding claims, **characterized in that** the sealing web (130, 210, 210a) is formed as a spring web.

6. Assembly or measuring instrument according to Claim 5, **characterized in that** the spring web is subjected to sustained prestressing, preferably acting in the axial direction, which is defined by a peripheral, shoulder-like extent (110) provided at the process connection (100) or at the media-carrying part.

7. Assembly or measuring instrument according to one of the preceding claims, **characterized in that** the releasable connection between the measuring instrument (1) and the adapter (200) or between the two adapter halves (201a, 202a) is realized by a screw and/or flange and/or clamping connection.

8. Assembly or measuring instrument according to one of the preceding claims, **characterized in that** the measuring instrument (1) is suitable for measuring a process variable, in particular for measuring pressures, temperatures, flows and filling levels.

## Revendications

1. Ensemble, en particulier destiné à mesurer une grandeur de processus, et constitué d'un appareil de mesure (1) qui présente
un raccordement (100) au processus et au moins un boîtier (2) partiellement à symétrie de rotation au moins au niveau du raccordement (100) au processus,
un adaptateur (200, 200a) qui présente un trou de passage qui s'étend dans la direction axiale et une nervure d'étanchéité (210) prévue dans le trou de passage,
une liaison libérable et étanche étant formée entre l'appareil de mesure (1) et l'adaptateur (200) par l'intermédiaire de deux surfaces d'étanchéité, **caractérisé en ce que**
au moins l'une des surfaces d'étanchéité présente un revêtement (300) en parylène.

2. Ensemble de liaison libérable et étanche de deux pièces conduisant un fluide, en particulier des conduits tubulaires,
dans lequel les deux pièces conduisant un fluide sont chacune configurées à symétrie de rotation à une extrémité et dans chacune desquelles une moitié d'adaptateur (201a, 202a) qui présente un trou de passage s'étendant dans la direction axiale est insérée,
au moins l'une des moitiés d'adaptateur (201a, 202a) présentant une nervure d'étanchéité (210a) dans le trou de passage et
une liaison libérable et étanche étant formée entre les deux moitiés d'adaptateur (201a, 202a) par l'intermédiaire de deux surfaces d'étanchéité, **caractérisé en ce que**
au moins l'une des surfaces d'étanchéité présente un revêtement (300) en parylène.

3. Appareil de mesure (1) pour la technique de mesure des processus, constitué
d'un raccordement (100) au processus,
d'un boîtier (2) placé sur le raccordement (100) au processus et
d'une cellule de mesure (3),
le raccordement (100) au processus présentant une nervure d'étanchéité (130) qui déborde vers l'intérieur et
la cellule de mesure (3) reposant sur la nervure d'étanchéité (130),
une liaison étanche étant formée entre le raccordement (100) au processus et la cellule de mesure (3) par l'intermédiaire de deux surfaces d'étanchéité, **caractérisé en ce que**
au moins l'une des surfaces d'étanchéité présente un revêtement (300) en parylène.

4. Ensemble ou appareil de mesure selon l'une des revendications précédentes, **caractérisé en ce que** l'épaisseur du revêtement (300) est comprise de préférence entre 0,1 µm et 50 µm et de façon particulièrement préférable entre 5 µm et 30 µm.

5. Ensemble ou appareil de mesure selon l'une des revendications précédentes, **caractérisé en ce que** la nervure d'étanchéité (130, 210, 210a) est configurée comme nervure élastique.

6. Ensemble ou appareil de mesure selon la revendication 5, **caractérisé en ce que** la nervure élastique subit une précontrainte durable agissant de préférence dans la direction axiale et définie par une extension périphérique (110) en forme d'épaulement prévue sur le raccordement (100) au processus ou sur la pièce conduisant un fluide.

7. Ensemble ou appareil de mesure selon l'une des revendications précédentes, **caractérisé en ce que** la liaison libérable entre l'appareil de mesure (1) et l'adaptateur (200) ou entre les deux moitiés d'adaptateur (201a, 202a) est réalisée par une liaison filetée et/ou une liaison à bride et/ou une liaison serrée.

8. Ensemble ou appareil de mesure selon l'une des revendications précédentes, **caractérisé en ce que** l'appareil de mesure (1) convient pour la mesure d'une grandeur de processus, en particulier une mesure de pression, de température, de débit ou de niveau.
